# EUROPÄISCHE PATENTSCHRIFT

(11) **EP 1 731 804 B1**
(45) Veröffentlichungstag und Bekanntmachung des Hinweises auf die Patenterteilung: **13.08.2008**
(21) Anmeldenummer: 05012434.6
(22) Anmeldetag: 09.06.2005
(51) Int. Cl.: F16J 15/32, F16J 15/00

(54) **Dichtung und Anordnung mit in Reihe geschalteten Dichtlippen**
Sealing and assembly provided with sealing lips in series
Joint d'étanchéité et assemblage comportant des lèvres d'étanchéité en série

(43) Veröffentlichungstag der Anmeldung: 13.12.2006
(73) Patentinhaber: Carl Freudenberg KG, 69469 Weinheim (DE)
(72) Erfinder: Vogt, Rolf, 68723 Ottersheim (DE); Sattler, Holger, 69483 Siedelsbrunn (DE); Urbanski, Volker, 64668 Rimbach (DE)

(56) Entgegenhaltungen:
- EP-A- 0 999 364
- EP-A- 1 152 177
- WO-A1-20/05116492
- US-A- 5 860 656
- US-A- 6 102 409

## Beschreibung

### Technisches Gebiet

Die Erfindung betrifft eine Dichtung, umfassend mindestens zwei Dichtlippen, wobei eine erste Dichtlippe und eine zweite Dichtlippe in Reihe angeordnet sind, wobei die Dichtlippen aus unterschiedlichen Materialien gefertigt sind und wobei die erste Dichtlippe aus einem verschleißfesteren Material als die zweite Dichtlippe gefertigt ist. Die Erfindung betrifft des Weiteren eine Anordnung, umfassend eine solche Dichtung, wobei die Dichtung einer rotierbaren Welle zugeordnet ist und wobei mindestens zwei Dichtlippen zwei Räume gegeneinander abdichten.

### Stand der Technik

Dichtungen und Anordnungen der eingangs genannten Art sind aus dem Stand der Technik bereits bekannt. Insbesondere ist aus der DE 197 54 400 A1 eine Dichtung bekannt, welche der Abdichtung zweier relativ zueinander verdrehbaren Maschinenelemente dient.

Aus den EP 0 999 364 A2, der US 6,102,409, der US 5,860,656 sowie der EP 1 152 177 A2 sind gattungsgemäße Dichtungen bekannt, bei denen eine Dichtlippe aus einem weniger verschleißfesten Material einem Druckraum unmittelbar zugewandt ist.

Normalerweise kommt einer Dichtlippe die Funktion zu, gegen ein Medium wie Luft oder Schmierstoff abzudichten. Aus dem Stand der Technik ist es bekannt, Dichtlippen aus einem Elastomer zu fertigen. Hierbei ist jedoch nachteilig, dass Elastomere bei spezifischen Anwendungen einem starken Verschleiß unterliegen.

Der Verschleiß ist um so stärker, je größer die Druckbeaufschlagung einer solchen Dichtlippe ist. Im Betrieb wird eine Dichtlippe durch den Druck eines Mediums oftmals übermäßig stark gegen ein rotierendes Bauteil, beispielsweise eine Welle, gepresst. Hierdurch erfährt die Dichtlippe eine starke Abrasion, was schon nach kurzer Betriebsdauer zu Leckagen führen kann.

### Darstellung der Erfindung

Der Erfindung liegt daher die Aufgabe zu Grunde, eine Dichtungsanordnung zu schaffen, bei der ein problemloser Betrieb bei langer Lebensdauer gewährleistet ist.

Erfindungsgemäß wird die voran stehende Aufgabe durch eine Dichtung mit den Merkmalen des Patentanspruchs 1 gelöst.

Erfindungsgemäß ist erkannt worden, dass durch die Auswahl geeigneter Materialien unterschiedlichen Dichtlippen unterschiedliche Funktionen zugeordnet werden können. Des Weiteren ist erkannt worden, dass jede Dichtlippe in Abhängigkeit von den an sie gestellten Anforderungen gefertigt werden kann. Insoweit können unterschiedliche Dichtlippen, entkoppelt voneinander, mit Materialeigenschaften versehen werden, welche einen möglichst verschleißfreien Betrieb der Dichtlippen realisieren.

Die erste Dichtlippe besteht aus einem verschleißfesteren Material als die zweite Dichtlippe. Die erste Dichtlippe ist aus einem härteren und/ oder biegesteiferen Material als die zweite Dichtlippe gefertigt. Diese Ausgestaltung ist sinnvoll, da die erste Dichtlippe einem Medium zugewandt ist, welches unter hohem Druck steht und die erste Dichtlippe gegen ein bewegtes Bauteil presst. Die erste Dichtlippe entlastet hierdurch die zweite Dichtlippe in Bezug auf deren Druckbeaufschlagung, so dass die zweite Dichtlippe aus einem weicheren Material gefertigt werden kann. Der zweiten Dichtlippe kann dann die Funktion zukommen, geringe Leckagen, die die erste Dichtlippe passiert haben, zuverlässig abzudichten.

Hierdurch ist es möglich, einen problemlosen Betrieb einer Dichtungsanordnung bei langer Lebensdauer zu realisieren.

Folglich ist die eingangs genannte Aufgabe gelöst.

Vor diesem Hintergrund könnte die erste Dichtlippe aus Polytetrafluorethylen gefertigt sein. Eine Dichtlippe aus Polytetrafluorethylen dichtet in zuverlässiger Weise ab und verschleißt nur in sehr geringem Maße. Auf Grund der relativ harten, kornartigen Struktur des Polytetrafluorethylens passt sich dieses Material jedoch nur unvollkommen an die Oberfläche eines rotierenden Bauteils an. Dies hat zur Folge, dass gegen ein druckbeaufschlagtes Medium nicht zuverlässig abgedichtet werden kann. Die Folge ist eine schleichende Leckage. Als druckbeaufschlagte Medien fungieren Luft, Ölnebel oder dünnflüssige Schmierstoffe, die auf Grund ihrer geringen Viskosität sehr leicht durch Kapillaren oder Poren des Polytetrafluorethylens hindurch diffundieren können. Die erste Dichtlippe kann entweder vollständig oder teilweise aus Polytetrafluorethylen gefertigt sein. Denkbar ist dabei, dass der Dichtlippe eine Folie aus Polytetrafluorethylen zugeordnet ist oder eine solche Folie als Dichtlippe fungiert.

Die zweite Dichtlippe könnte aus einem Elastomer gefertigt sein. Diese Ausgestaltung ermöglicht vorteilhaft, dass Mikroleckagen, welche durch die erste Dichtlippe aus Polytetrafluorethylen erzeugt werden, in zuverlässiger Weise abgedichtet werden können. Insoweit erfolgt durch die zweite Dichtlippe eine "Feinabdichtung".

Die zweite Dichtlippe aus Elastomer wird weitestgehend vor zu starker Druckbeaufschlagung durch die erste Dichtlippe geschützt, so dass die zweite Dichtlippe nur in geringem Maße gegen ein rotierendes Bauteil gepresst wird. Hierdurch ist ein geringer Verschleiß der zweiten Dichtlippe bei optimierter Abdichtung gewährleistet.

An die zweite Dichtlippe könnte sich eine dritte Dichtlippe anschließen. Die dritte Dichtlippe könnte beispielsweise durch Federbeaufschlagung gegen ein rotierendes Bauteil gepresst werden. Bei einer solchen Anordnung fungiert die zweite Dichtlippe als Vorschaltlippe, welche eine erste Feinabdichtung vornimmt und die dritte Dichtlippe als zusätzliche Abdichtung, welche die Feinabdichtung optimiert.

Die zweite und die dritte Dichtlippe könnten materialeinheitlich gefertigt sein. Dabei ist denkbar, dass die Dichtlippen aus einem Elastomer gefertigt sind. Denkbar ist vor diesem Hintergrund auch, dass die erste und die zweite Dichtlippe einstückig ausgebildet sind. Hierdurch ist vorteilhaft realisierbar, dass die zweite und dritte Dichtlippe in nur wenigen Arbeitsschritten verarbeitet werden können.

Die Dichtlippen könnten zumindest abschnittsweise parallel zueinander ausgerichtet sein. Diese konkrete Ausgestaltung erlaubt ein einfaches Zusammenfügen der einzelnen Bauteile einer Dichtung, da parallele Flächen besonders gut miteinander verbunden werden können.

Die zweite Dichtlippe könnte durch ein Gehäuse abgestützt sein. Die zweite Dichtlippe besteht aus einem Elastomer, welches auf Grund seiner Weichheit bei Druckbeaufschlagung nicht formstabil ist. Insbesondere ist vor diesem Hintergrund denkbar, dass eine Dichtlippe aus Elastomer bei zu starker Druckbeaufschlagung umgestülpt werden kann. Um diesem zu begegnen, könnte ein Gehäuse die zweite Dichtlippe weitgehend umgeben oder in die Dichtlippe bzw. den Dichtlippenkörper eingebettet sein. Denkbar ist auch, zusätzlich zum Gehäuse oder in Alleinstellung einen Stützkörper vorzusehen, der in den Dichtlippenkörper eingebettet ist.

Das Gehäuse und/ oder der Stützkörper könnten vor diesem Hintergrund L-förmig ausgestaltet sein. Die L-Form ermöglicht eine besonders feste Verbindung des Elastomers mit dem Gehäuse oder dem Stützkörper, welche aus Metall gefertigt sein können. Das Elastomer kann mit dem Gehäuse und/ oder dem Stützkörper verklebt oder durch Vulkanisation verbunden sein.

Die Dichtlippen und/ oder das Gehäuse könnten zumindest einen Entlüftungskanal definieren. Ein Entlüftungskanal ermöglicht auf besonders elegante Weise eine Druckentlastung der zweiten Dichtlippe. Druckbeaufschlagtes Medium, welches die erste Dichtlippe passiert, strömt in ein Volumen, welches durch die zweite Dichtlippe begrenzt ist. Ohne Entlüftungskanal würde das druckbeaufschlagte Medium die zweite Dichtlippe mit hohem Druck beaufschlagen und gegen ein rotierendes Bauteil pressen. Durch die Vorkehrung von Entlüftungskanälen kann das druckbeaufschlagte Medium jedoch entweichen, wodurch die zweite Dichtlippe wirksam entlastet wird.

Die eingangs genannte Aufgabe ist des Weiteren durch eine Anordnung mit den Merkmalen des Patentanspruchs 11 gelöst. Danach umfasst eine Anordnung eine Dichtung der zuvor beschriebenen Art, wobei die Dichtung einer rotierbaren Welle zugeordnet ist und wobei mindestens zwei Dichtlippen zwei Räume gegeneinander abdichten.

Um Wiederholungen zu vermeiden, sei in Bezug auf die erfinderische Tätigkeit auf die Ausführungen zur Dichtung als solcher verwiesen.

Ein erster Raum steht unter einem höheren Druck als ein zweiter Raum und die erste Dichtlippe ist dem ersten Raum zugewandt und in dessen Richtung vorgewölbt. Dabei ist die zweite Dichtlippe ebenfalls in Richtung des ersten Raums vorgewölbt. Hierdurch fungiert die erste Dichtlippe als Drossel und die zweite Dichtlippe wird wirksam vor der Druckeinwirkung aus dem ersten Raum geschützt.

Die Dichtlippen könnten unter radialer Spannung an der Welle anliegen. Dabei ist denkbar, dass die Dichtlippen derart ausgeformt sind, dass sie unter einer Vorspannung stehen, welche die Dichtlippen gegen die Oberfläche der Welle anpresst. Hierdurch ist die Abdichtungswirkung der Dichtlippen verstärkt. Die Dichtlippen können mit unterschiedlicher Vorspannung oder radialer Spannung beaufschlagt sein. Diese Ausgestaltung der Dichtlippen im Zusammenhang mit der Anordnung ist selbstverständlich auch-auf-die Dichtung allein anwendbar.

Es gibt nun verschiedene Möglichkeiten, die Lehre der vorliegenden Erfindung auf vorteilhafte Weise auszugestalten und weiter zu bilden. Dazu ist einerseits auf die den nebengeordneten Patentansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Dichtungsanordnung, bei der die zweite Dichtlippe durch ein L-förmiges Gehäuse umgeben ist,
- Fig. 2: eine Dichtungsanordnung, die in einer Bohrung eines Gehäuses angeordnet ist,
- Fig. 3: eine Dichtungsanordnung, bei der die erste Dichtlippe zwischen zwei Stützkörpern eingeklemmt ist,
- Fig. 4: eine Dichtungsanordnung mit einer dritten Dichtlippe,
- Fig. 5: eine Dichtung mit einem Entlüftungskanal und einer dritten Dichtlippe, welche federbeaufschlagt gegen eine Welle pressbar ist,
- Fig. 6: eine Dichtungsanordnung, welche einen Entlüftungskanal umfasst, der durch ein L-förmiges Gehäuse verläuft, und
- Fig. 7: eine Dichtungsanordnung, bei der in den Körper der zweiten und dritten Dichtlippe ein Stützkörper eingebettet ist.

### Ausführung der Erfindung

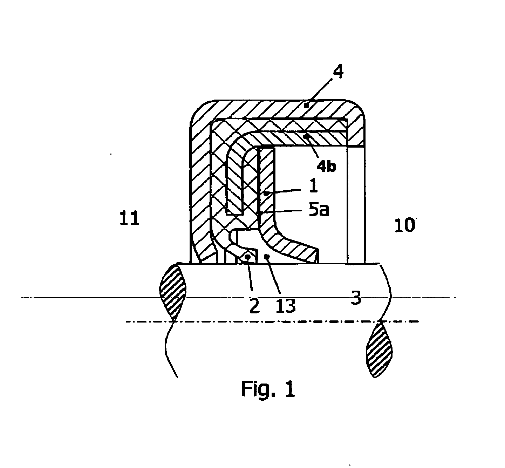

Fig. 1 zeigt eine Dichtung, welche mindestens zwei Dichtlippen 1 und 2 umfasst. Die erste Dichtlippe 1 und die zweite Dichtlippe 2 sind in Reihe angeordnet. Die Dichtlippen 1, 2 sind aus unterschiedlichen Materialien gefertigt.

Die erste Dichtlippe 1 ist aus einem verschleißfesteren Material als die zweite Dichtlippe 2 gefertigt, Die erste Dichtlippe 1 ist aus Polytetrafluorethylen und die zweite Dichtlippe 2 aus einem Elastomer gefertigt. Die zwei Dichtlippen 1, 2 sind mit axialem Abstand in Bezug auf eine Welle 3 zueinander benachbart angeordnet. Die Dichtlippen 1, 2 sind als axiale Reihenschaltung in Richtung der Achse der Welle 3 angeordnet. Die Dichtlippen 1, 2 sind gleichsinnig axial in Richtung eines abzudichtenden Raums 10 vorgewölbt.

Die Abstützung der Dichtlippe 2 erfolgt durch ein Gehäuse 4, welches L-förmig ausgestaltet ist. Das Gehäuse 4 umgibt den Körper, aus dem die Dichtlippe 2 gebildet ist, Das Gehäuse 4 weist an seinen Enden flanschartige Umbiegungen auf, um den Dichtlippenkörper zu umhüllen. In den Dichtlippenkörper der Dichtlippe 2 ist ein L-förmiger Stützkörper 4b eingebettet. Dieser kann anvulkanisiert oder eingeklebt sein.

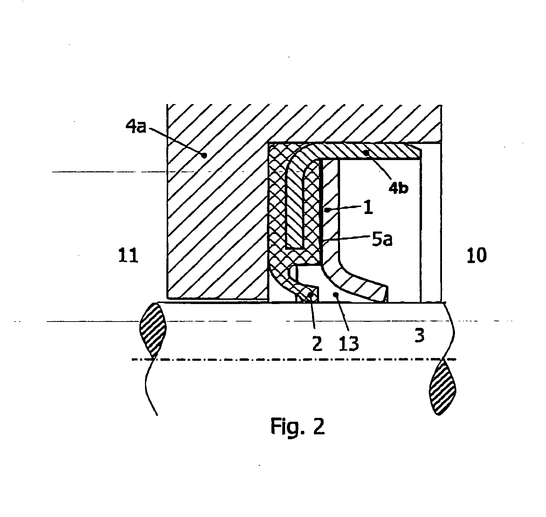

Fig. 2 zeigt eine Dichtungsanordnung, welche in ähnlicher Weise aufgebaut ist, wie die Dichtungsanordnung gemäß Fig. 1. Die Dichtung ist in einer Bohrung eines Gehäuses 4a aufgenommen und direkt durch die Bohrungswandung gelagert. Das Gehäuse 4a könnte als Motorgehäuse oder Getriebegehäuse ausgebildet sein.

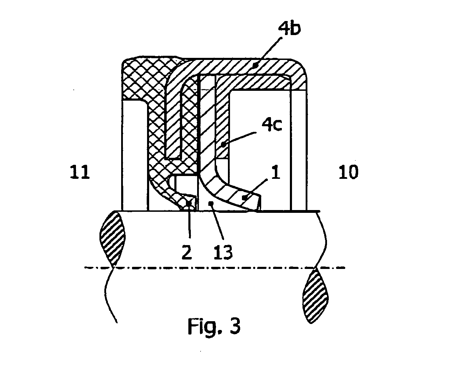

Fig. 3 zeigt eine Dichtungsanordnung, welche in ähnlicher Weise aufgebaut ist, wie die Dichtungsanordnung gemäß Fig. 1. Allerdings ist die erste Dichtlippe 1 nicht an den Dichtlippenkörper der Dichtlippe 2 anvulkanisiert oder geklebt, sondern wird durch den Stützkörper 4c und den Stützkörper 4b an den Dichtlippenkörper der Dichtlippe 2 angepresst.

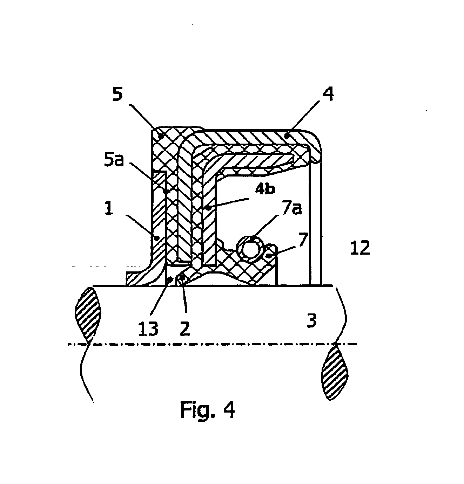

Fig. 4 zeigt eine Dichtungsanordnung, welche eine dritte Dichtlippe 7 umfasst. Die dritte Dichtlippe 7 ist mit den ersten beiden Dichtlippen 1 und 2 in Reihe geschaltet. Die zweite Dichtlippe 2 und die dritte Dichtlippe 7 sind materialeinheitlich gefertigt.

Die dritte Dichtlippe 7 wird durch eine Ringfeder 7a gegen die Welle 3 gepresst. Dabei fungiert die zweite Dichtlippe 2 als Vorschaltlippe. Der Körper, aus dem die Dichtlippe 2 und die Dichtlippe 7 gefertigt sind, ist in ein Gehäuse 4 eingefügt. Zwischen dem Gehäuse 4 und der ersten Dichtlippe 1 ist ein separates Verbindungselement 5 anvulkanisiert oder angeklebt. Das Verbindungselement 5 ist sowohl mit der Dichtlippe 1 als auch mit dem Gehäuse 4 verklebt bzw. vulkanisiert. Das separate Verbindungselement 5 ist über einen Verbindungsbereich 5a mit der ersten Dichtlippe 1 verbunden, wobei der Verbindungsbereich 5a als Vulkanisationsschicht oder Klebeschicht ausgestaltet sein kann.

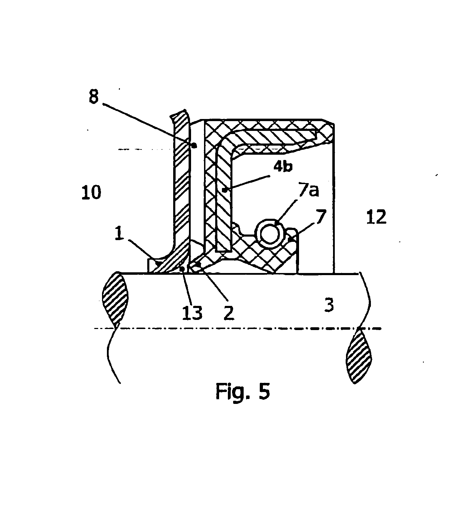

Fig. 5 zeigt eine Dichtungsanordnung, welcher ein Entlüftungskanal 8 zugeordnet ist. Die Dichtlippen 1 und 2 definieren den Entlüftungskanal 8. Das druckbeaufschlagte Medium kann aus dem Raum 10 in den Zwischenraum 13 zwischen der Dichtlippe 1 und der Dichtlippe 2 strömen und von dort in den Entlüftungskanal 8.

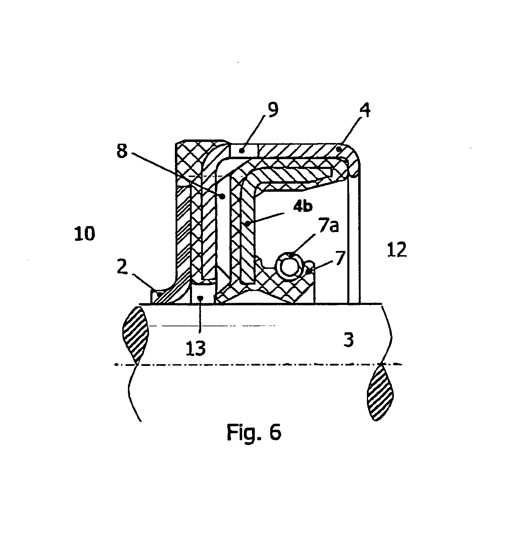

Fig. 6 zeigt eine Dichtungsanordnung gemäß Fig. 5, wobei im Gehäuse 4 Bohrungen 9 vorgesehen sind, welche mit dem Entlüftungskanal 8 und dem Raum 13 strömungsverbunden sind. Die Räume 10 und 12 sollen gegeneinander abgedichtet werden.

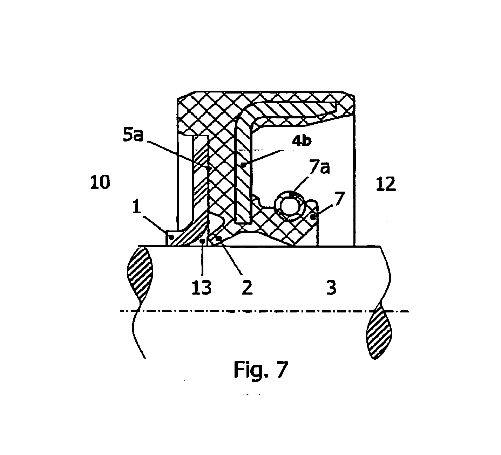

Fig. 7 zeigt eine Dichtungsanordnung, bei dem die Dichtung einen ähnlichen Aufbau zeigt, wie in Fig. 4. Der Körper aus dem die Dichtlippen 2 und 7 gefertigt sind, ist einteilig ausgestaltet und mit der ersten Dichtlippe 1 über den Verbindungsbereich 5a verbunden.

Die Dichtlippen 1 und 2 liegen unter radialer Spannung an der Welle 3 an. Diese Ausgestaltung gilt für alle in den Figuren 1 bis 7 erläuterten Ausführungsbeispiele.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen. Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Dichtung, umfassend mindestens zwei Dichtlippen (1, 2), wobei eine erste Dichtlippe (1) und eine zweite Dichtlippe (2) in Reihe angeordnet sind, wobei die Dichtlippen (1, 2) aus unterschiedlichen Materialien gefertigt sind und wobei die erste Dichtlippe (1) aus einem verschleißfesteren Material als die zweite Dichtlippe (2) gefertigt ist, **dadurch gekennzeichnet, dass** die Dichtlippen (1, 2) in einer Wölbungsrichtung vorgewölbt sind und die erste Dichtlippe (1) der zweiten Dichtlippe (2) in Wölbungsrichtung nachfolgt, derart, dass die zweite Dichtlippe (2) in Richtung der ersten Dichtlippe (1) vorgewölbt ist.

2. Dichtung nach Anspruch 1, **dadurch gekennzeichnet, dass** die erste Dichtlippe (1) aus Polytetrafluorethylen gefertigt ist.

3. Dichtung nach einem der Ansprüche 1 oder 2, **dadurch gekennzeichnet, dass** die zweite Dichtlippe (2) aus einem Elastomer gefertigt ist.

4. Dichtung nach einem der Ansprüche 1 bis 3, **dadurch gekennzeichnet, dass** sich an die zweite Dichtlippe (2) eine dritte Dichtlippe (7) anschließt.

5. Dichtung nach Anspruch 4, **dadurch gekennzeichnet, dass** die zweite (2) und die dritte Dichtlippe (7) materialeinheitlich gefertigt sind.

6. Dichtung nach einem der Ansprüche 1 bis 5, **dadurch gekennzeichnet, dass** die Dichtlippen (1, 2, 7) zumindest abschnittsweise parallel zueinander ausgerichtet sind.

7. Dichtung nach einem der Ansprüche 1 bis 6, **dadurch gekennzeichnet, dass** die zweite Dichtlippe (2) durch ein Gehäuse (4, 4a) und/ oder durch einen Stützkörper (4b) abgestützt ist, wobei das Gehäuse und/ oder der Stützkörper Bauteile der Dichtung sind.

8. Dichtung nach Anspruch 7, **dadurch gekennzeichnet, dass** das Gehäuse und/ oder der Stützkörper (4, 4b) L-förmig ausgestaltet ist/ sind.

9. Dichtung nach Anspruch 7 oder 8, **dadurch gekennzeichnet, dass** die Dichtlippen (1, 2) und/ oder das Gehäuse (4) zumindest einen Entlüftungskanal (8) definieren.

10. Anordnung, umfassend eine Dichtung nach einem der voran stehenden Ansprüche, wobei die Dichtung einer rotierbaren Welle (3) zugeordnet ist, wobei mindestens zwei Dichtlippen (1, 2) zwei Räume (10, 11, 12) gegeneinander abdichten, wobei ein erster Raum (10) unter höherem Druck steht als ein zweiter Raum (11, 12) und die erste Dichtlippe (1) dem ersten Raum (10) zugewandt und in dessen Richtung vorgewölbt ist und wobei die zweite Dichtlippe (2) in Richtung des ersten Raums (10) vorgewölbt ist.

11. Anordnung nach Anspruch 10, **dadurch gekennzeichnet, dass** die Dichtlippen (1, 2, 7) unter radialer Spannung an der Welle (3) anliegen.

## Claims

1. Seal, comprising at least two sealing lips (1, 2), a first sealing lip (1) and a second sealing lip (2) being arranged in series, the sealing lips (1, 2) being produced from different materials and the first sealing lip (1) being produced from a more wear-resistant material than the second sealing lip (2), **characterized in that** the sealing lips (1, 2) are made to protrude in a direction of curvature and the first sealing lip (1) follows the second sealing lip (2) in the direction of curvature in such a way that the second sealing lip (2) is made to protrude in the direction of the first sealing lip (1).

2. Seal according to Claim 1, **characterized in that** the first sealing lip (1) is produced from polytetrafluoroethylene.

3. Seal according to either of Claims 1 and 2, **characterized in that** the second sealing lip (2) is produced from an elastomer.

4. Seal according to one of Claims 1 to 3, **characterized in that** the second sealing lip (2) is adjoined by a third sealing lip (7).

5. Seal according to Claim 4, **characterized in that** the second sealing lip (2) and the third sealing lip (7) are produced from the same material.

6. Seal according to one of Claims 1 to 5, **characterized in that** the sealing lips (1, 2, 7) are aligned parallel to one another, at least in certain portions.

7. Seal according to one of Claims 1 to 6, **characterized in that** the second sealing lip (2) is supported by a housing (4, 4a) and/or by a supporting body (4b), the housing and/or the supporting body being components of the seal.

8. Seal according to Claim 7, **characterized in that** the housing and/or the supporting body (4, 4b) is/are of an L-shaped design.

9. Seal according to Claim 7 or 8, **characterized in that** the sealing lips (1, 2) and/or the housing (4) define at least one venting channel (8).

10. Assembly, comprising a seal according to one of the preceding claims, the seal being assigned to a rotatable shaft (3), at least two sealing lips (1, 2) sealing two spaces (10, 11, 12) from each other, a first space (10) being under higher pressure than a second space (11, 12) and the first sealing lip (1) facing the first space (10) and being made to protrude in the direction of the latter, and the second sealing lip (2) being made to protrude in the direction of the first space (10).

11. Assembly according to Claim 10, **characterized in that** the sealing lips (1, 2, 7) lie against the shaft (3) under radial stress.

## Revendications

1. Joint d'étanchéité, comprenant au moins deux lèvres d'étanchéité (1, 2), une première lèvre d'étanchéité (1) et une deuxième lèvre d'étanchéité (2) étant disposées en rang, les lèvres d'étanchéité (1, .2) étant fabriquées en matériaux différents, et la première lèvre d'étanchéité (1) étant fabriquée en un matériau plus résistant à l'usure que la deuxième lèvre d'étanchéité (2), **caractérisé en ce que** les lèvres d'étanchéité (1, 2) sont précintrées dans une direction de courbure et la première lèvre d'étanchéité (1) suit la deuxième lèvre d'étanchéité (2) dans la direction de courbure de telle sorte que la deuxième lèvre d'étanchéité (2) soit précintrée dans la direction de la première lèvre d'étanchéité (1).

2. Joint d'étanchéité selon la revendication 1, **caractérisé en ce que** la première lèvre d'étanchéité (1) est en polytétrafluoréthylène.

3. Joint d'étanchéité selon l'une quelconque des revendications 1 ou 2, **caractérisé en ce que** la deuxième lèvre d'étanchéité (2) est en élastomère.

4. Joint d'étanchéité selon l'une quelconque des revendications 1 à 3, **caractérisé en ce qu'**une troisième lèvre d'étanchéité (7) se raccorde à la deuxième lèvre d'étanchéité (2).

5. Joint d'étanchéité selon la revendication 4, **caractérisé en ce que** la deuxième (2) et la troisième (7) lèvre d'étanchéité sont fabriquées en le même matériau.

6. Joint d'étanchéité selon l'une quelconque des revendications 1 à 5, **caractérisé en ce que** les lèvres d'étanchéité (1, 2, 7) sont orientées au moins en partie parallèlement les unes aux autres.

7. Joint d'étanchéité selon l'une quelconque des revendications 1 à 6, **caractérisé en ce que** la deuxième lèvre d'étanchéité (2) est supportée par un boîtier (4, 4a) et/ou par un corps de support (4b), le boîtier et/ou le corps de support étant des composants du joint d'étanchéité.

8. Joint d'étanchéité selon la revendication 7, **caractérisé en ce que** le boîtier et/ou le corps de support (4, 4b) est/sont en forme de L.

9. Joint d'étanchéité selon la revendication 7 ou 8, **caractérisé en ce que** les lèvres d'étanchéité (1, 2) et/ou le boîtier (4) définissent au moins un canal de désaérage (8).

10. Agencement, comprenant un joint d'étanchéité selon l'une quelconque des revendications précédentes, dans lequel le joint d'étanchéité est associé à un arbre rotatif (3), au moins deux lèvres d'étanchéité (1, 2) fermant hermétiquement deux chambres (10, 11, 12) l'une par rapport à l'autre, une première chambre (10) étant soumise à une pression plus élevée qu'une deuxième chambre (11, 12) et la première lèvre d'étanchéité (1) étant tournée vers la première chambre (10) et étant précintrée dans sa direction, et la deuxième lèvre d'étanchéité (2) étant précintrée dans la direction de la première chambre (10).

11. Agencement selon la revendication 10, **caractérisé en ce que** les lèvres d'étanchéité (1, 2, 7) s'appliquent avec contrainte radiale contre l'arbre (3).
